# NEUE EUROPÄISCHE PATENTSCHRIFT

(11) **EP 1 688 478 B2**
(45) Veröffentlichungstag und Bekanntmachung des Hinweises auf die Entscheidung über den Einspruch: **05.06.2019**
(45) Hinweis auf die Patenterteilung: 16.09.2009
(21) Anmeldenummer: 05002298.7
(22) Anmeldetag: 03.02.2005
(51) Int. Cl.: C12C 13/02, C12C 13/06, C12C 13/08, C12C 7/20, C12C 7/22, C12H 1/00

(54) **Maisch- oder Würzepfanne zum Erhitzen von Maische oder Würze**
Apparatus for heating a fluid
Appareil pour le chauffage d'un fluide

(43) Veröffentlichungstag der Anmeldung: 09.08.2006
(73) Patentinhaber: KRONES Aktiengesellschaft, 93073 Neutraubling (DE)
(72) Erfinder: Kammerloher, Helmut, 85354 Freising (DE)
(74) Vertreter: Grünecker Patent- und Rechtsanwälte PartG mbB

(56) Entgegenhaltungen:
- WO-A-01/12773
- WO-A-02/12433
- DE-C- 686 020
- DE-C1- 19 828 686
- US-A- 4 163 417

## Beschreibung

Die Erfindung betrifft eine Maisch-oder Würzepfanne.

Aus der WO-A-0212433, der US-A-4163417 sowie der DE-C-686020 sind bereits Vorrichtungen zum Erhitzen von Maische oder Würze bekannt, mit einer zur Maische oder Würze gerichteten ebenen Heizfläche.

Im Brauwesen werden derartige Vorrichtungen beispielsweise Maischepfanne oder Würzepfanne genannt. Zum Erhitzen des Fluids ist in einem Fluidbereich wenigstens eine beheizbare Kontaktfläche vorgesehen. Dies kann beispielsweise die Seitenwand und/oder der Boden des Behälters sein oder auch eine speziell zum Erhitzen vorgesehene Kontaktfläche. Derartige Gefäße haben eine Kapazität für zehn Tonnen Fluid oder mehr.

Aufgabe der vorliegenden Erfindung ist es, eine Vorrichtung zu schaffen, mit der ein schnelleres Erhitzen und eine schnellere Stoffumsetzung des Fluids möglich ist.

Diese Aufgabe wird durch eine Vorrichtung nach Anspruch 1 gelöst.

In der Getränketechnologie sind hygienische Anforderungen in besonderem Maße gegeben. Es ist deshalb üblich, alle Bereiche, die mit dem Getränk oder dessen Vorprodukten in Kontakt kommen, möglichst so auszugestalten, dass sich keine Winkel oder Ecken ausbilden, in denen Produktreste haften bleiben und/oder sich Keimbelastungen ausbilden können. Aus diesem Grund werden innenliegende Flächen immer möglichst glatt und eben ausgebildet

Es hat sich nun gezeigt, dass mit einer Kontaktfläche einer Maisch- oder Würzepfanne zum Erhitzen von Maische oder Würze, ein besserer Wärmeübergang in das Fluid erreicht werden kann, wenn die Kontaktfläche zumindest teilweise Unebenheiten aufweist.

Hierbei hat es sich als besonders vorteilhaft herausgestellt, wenn die Unebenheiten wellenförmig und/oder blasenförmig und/oder wölbungsförmig sind, da dann ein gutes Fließverhalten des Fluids an der Kontaktfläche erreicht wird. Stauzonen und Schichten, in denen das Fluid lange an einer Stelle oder einem Bereich der Kontaktfläche verbleibt und so anbackt, können vermieden werden. Die Unebenheiten fördern den Stoffaustausch und die Stoffumsetzung.

Um die Fertigungstechnik möglichst einfach zu halten, ist es vorteilhaft, wenn die Unebenheiten periodisch sind.

Vorteilhaft ist insbesondere eine Ausführungsform, bei der die Kontaktfläche doppelwandig ist. Dadurch kann ein Heizmittel, wie etwa Dampf oder Hochdruckheißwasser, in den Zwischenraum zwischen die beiden Wandungen der Kontaktfläche gegeben werden, um so das Fluid zu erhitzen.

Ein besonders guter Wärmeübertrag ergibt sich dann, wenn die zum Fluidbereich gerichtete Wandung dünner oder gleich dick ist, wie die andere Wandung. Die Wandung mit der dickeren Wandstärke kann dann die dünnere Wandung tragen, um so die Kräfte aufzunehmen, die das Fluid auf die Kontaktfläche ausübt oder Kräfte, die durch das Eigengewicht der Kontaktfläche gegeben sind.

Durch eine Velzahl von Verbindungsstellen zwischen den beiden Wandungen ergibt sich eine stabile Konstruktion. Zwischen den Verbindungsstellen können dann vorteilhafterweise die Unebenheiten ausgebildet werden.

Die Wandung mit der dickeren Wandstärke ist vorteilhafterweise eben, sodass auf ihr Peripherieanschlüsse in einfacher Weise aufgebracht werden können.

Für ein gutes Erhitzen ist es weiterhin von Vorteil, wenn eine Einrichtung vorgesehen ist, mit der das Fluid entlang der Kontaktfläche in einer Bewegungsrichtung bewegt und vorbeigefördert werden kann. Dadurch wird verhindert, dass sich Fluid an der Kontaktfläche überhitzt und weiterhin wird ermöglicht, dass noch kaltes Fluid mit der Kontaktfläche in Kontakt kommt.

Vorteilhaft ist weiterhin, wenn Verbindungsstellen zwischen den beiden Wandungen länglich ausgebildet und im Vergleich zur Bewegungsrichtung des Fluids schräg angeordnet sind. Dadurch kann eine Relativströmung des Fluids quer zur Hauptströmung induziert werden, was zu einer guten Vermischung und zu einem guten Stoffaustausch an der Kontaktfläche führen kann.

Im Folgenden soll eine Ausführungsform der Erfindung anhand der beiliegenden Figuren erläutert werden. Dabei zeigt:
- Figur 1: eine dreidimensionale schematische Darstellung einer Vorrichtung;
- Figur 2: eine schematische Schnittzeichnung einer Vorrichtung:
- Figur 3: eine schematische Darstellung eines Abschnitts der Seitenwand;
- Figur 4: eine schematische Darstellung eines Abschnitts des Bodens;
- Figur 5: eine dreidimensionale schematische Darstellung der Seitenwand;
- Figur 6: eine schematische Schnittzeichnung der Seitenwand;
- Figur 7: ein Diagramm, das die Heizrate als Funktion der Sudnummer zeigt.

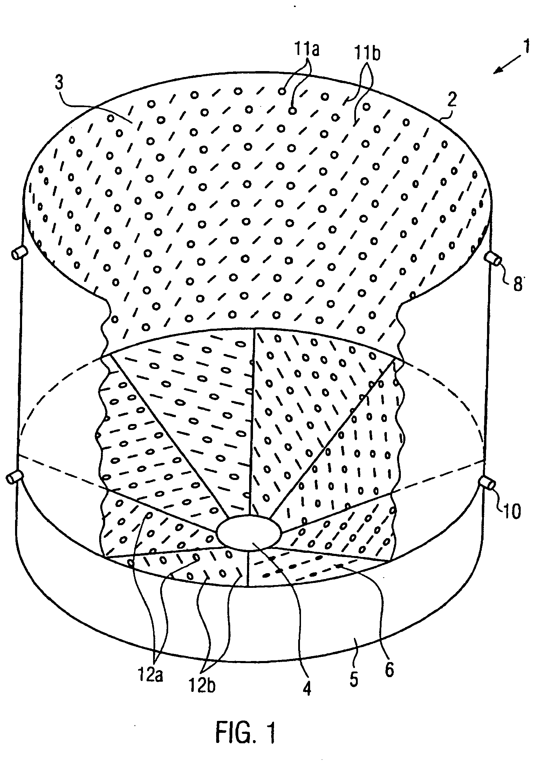

In Figur 1 wird eine Maischepfanne besprochen. Entsprechendes gilt jedoch auch für Würzepfannen zum Erhitzen eines Fluids in der Getränketechnologie, wie etwa der Brauerei.

Die Maischepfanne 1 weist eine Seitenwand 2 und einen Boden 6 auf. Die Seitenwand 2 hat hier beispielhaft die Form einer Zylindermantelfläche, kann aber auch andere Formen haben. Die Seitenwand 2 ist in der Darstellung in Figur 1 im vorderen Bereich gebrochen dargestellt, um so einen Einblick in das Innere der Maischepfanne 1 zu erhalten. Der Boden 6 ist konisch und endet in der Mitte nach unten gerichtet in einem Ausfluss 4. Seitlich neben dem Konus des Bodens 6 ist ein Seitenwandbereich 5 vorgesehen. Dieser kann zum Stützen des Maischebottichs 1 vorgesehen sein.

Der Boden 6 und die Seitenwand 2 bilden einen Innenraum 3, der hier der Fluidbereich ist, da dieser mit Maische gefüllt werden kann. Sowohl die Seitenwand 2 als auch der Boden 6 sind hier als beheizbare Kontaktflächen, also als Heizflächen, ausgebildet. Es kann jedoch auch nur der Boden 6 oder nur die Seitenwand 2 als beheizbare Kontaktfläche vorgesehen sein.

Auch ist es möglich, beheizbare Einbauten wie etwa interne Wandelemente und/oder ein oder mehrere beheizbare Rührwerke oder ähnliches vorzusehen. Diese können statt oder zusätzlich zu dem beheizbaren Boden 6 und/oder der beheizbaren Seitenwand 2 vorgesehen sein.

Am oberen Ende der Seitenwand 2 befinden sich Zuführungen 8. Über die Zuführungen 8 kann heißer Dampf für die Seitenwand 2 zugeführt werden.

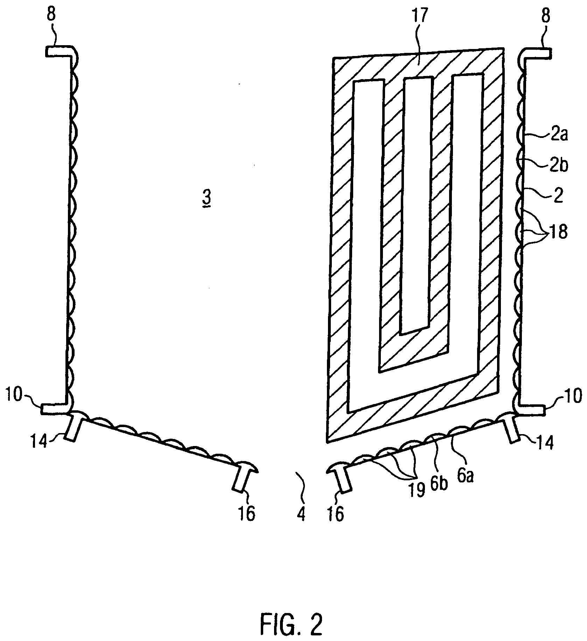

Die Seitenwand 2 ist doppelwandig ausgebildet (siehe Figur 2), sodass Dampf aus den Zuführungen 8 in den Zwischenraum zwischen die beiden Wandungen der Seitenwand 2 gelangen kann.

Zwischen den beiden Wandungen kann der Dampf nach unten strömen und dabei die Seitenwand 2 erhitzen. Am unteren Ende der Seitenwand 2 sind Abflusseinrichtungen 10 für überschüssigen Dampf oder Kondensat vorgesehen.

Statt heißem Dampf kann auch jedes andere Heizmittel vorgesehen sein, wie etwa Hochdruckheißwasser.

In Figur 1 sind ringförmige Verbindungsstellen 11 a und linieförmige Verbindungsstellen 11 b zwischen den beiden Wandungen der Seitenwand 2 gezeigt.

Auch der Boden 6 ist doppelwandig ausgebildet. Verbindungsstellen zwischen den beiden Wandungen des Bodens 6 sind in Figur 1 entsprechend mit 12a und 12b bezeichnet.

In Figur 2 ist die Vorrichtung aus Figur 1 im Schnitt dargestellt. Zusätzlich ist hier ein Blatt 17 eines Rührwerks dargestellt. Dieses Blatt 17 ist lediglich beispielhaft und kann auch jede andere geeignete Form haben. Auch muss das Rührwerk keine Rührwerksblätter aufweisen, sondem kann mit jedem anderen geeigneten Mittel zum Bewegen des Fluids versehen sein. Statt eines Rührwerks kann auch eine Einrichtung zum Umpumpen vorgesehen sein, mit der das Fluid entlang der Kontaktfläche in Bewegung versetzt wird.

In Figur 2 ist zu erkennen, wie die Seitenwand 2 und der Boden 6 doppelwandig sind. Die Seitenwand 2 hat eine äußere Wandung 2a und eine innere Wandung 2b. Der Boden 6 hat eine äußere Wandung 6a und eine innere Wandung 6b. Die inneren Wandungen 2b und 6b sind wellen-, blasen- oder wölbungsförmig ausgebildet, wodurch die inneren Wandungen 2b, 6b mit Unebenheiten versehen sind. Diese Unebenheiten sind zwischen den Verbindungsstellen 11a, 11 b oder 12a, 12b (siehe Figur 1) ausgebildet.

In Figur 2 sind weiterhin Zuführungen 14 und Ablaufeinrichtungen 16 dargestellt.

Zwischen den Wandungen 2a und 2b der Seitenwand 2 befinden sich Hohlräume 18, die durchgängig miteinander verbunden sind, sodass Dampf aus den Zuführungen 8 durch die Hohlräume 18 zu den Ablaufeinrichtungen 10 strömen kann. Ebenso sind zwischen den Wandungen 6a und 6b Hohlräume 19 vorgesehen, sodass aus den Zuführungen 14 Dampf in die Hohlräume 19 strömen kann und von dort Kondensat/Dampf in die Ablaufeinrichtungen 16 gelangen kann. Die Zuführungen 14 könnten auch weiter innen, entlang des Konusses nach unten verschoben, angeordnet sein. Ebenso könnten die Zulaufstutzen 8 etwas weiter unten verlaufen, da dann immer noch ein genügender Wärmeeintrag bis ins obere Ende der Maischepfanne gewährleistet ist. Auch muss das oberste Ende der Seitenwand 2 nicht vollständig beheizt werden, da die Maischepfanne 1 nie vollständig bis zum obersten Ende gefüllt sein wird.

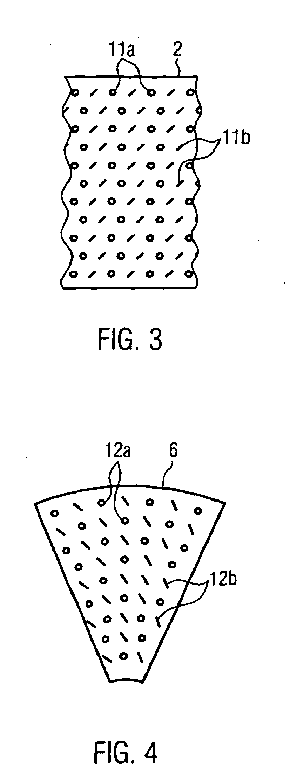

In Figur 3 ist ein Abschnitt der Seitenwand 2 dargestellt. Ringförmige Verbindungsstellen 11a und linienförmige Verbindungsstellen 11 b verbinden die beiden Wandungen 2a und 2b. Die Verbindungsstellen 11a und 11 b sind hier in einem regelmäßigen hexagonalen Muster angeordnet. Es sind auch quadratische oder rechteckige oder sonstige regelmäßige oder unregelmäßige Muster möglich. Statt einer Kombination aus ringförmigen und linienförmigen Verbindungsstellen 11a, 11 b könnten auch nur ringförmige oder nur linienförmige Verbindungsstellen 11 a, 11 b vorgesehen sein.

In Figur 4 ist ein Segment des Bodens 6 dargestellt. Hier sind auch ringförmige (12a) und linienförmige Verbindungslinien 12b dargestellt.

Die linienförmigen Verbindungsstellen 11 b, 12b sind gegenüber einer Tangentialrichtung schräg angeordnet. Bei Betrieb der Maischepfanne mit einem Rührwerk strömt die Maische in der Pfanne in einem gewissen Punkt in Tangentialrichtung (Bewegungsrichtung). Die Verbindungslinien 11 b, 12b sind hier schräg zu dieser Bewegungsrichtung angeordnet, um so eine gewisse Querströmungskomponente (am Boden radial nach innen oder außen und an der Seitenwand vertikal gerichtet) induzieren zu können.

Durch verschieden geformte Verbindungsstellen 11a, 11b, 12a, 12b können die Verbindungsstellen für verschiedene Anforderungen unabhängig voneinander optimiert werden. Zum einen haben die Verbindungsstellen 11, 12 die Funktion die beiden Wandungen zusammenzuhalten, was besonders gut durch ringförmige Verbindungsstellen 11a, 12a erreicht wird. Andererseits ermöglicht eine längliche Form (11 b, 12b) auch die Funktion des Induzierens einer Relativströmung (s.o.). Durch das gleichzeitige Vorsehen von zwei oder mehr Arten von Verbindungsstellen können beide Effekte gleichzeitig erreicht werden.

Die Seitenwand 2 und der Boden 6 können aber auch nur mit ringförmigen oder nur mit linienförmigen Verbindungsstellen 11 oder 12 versehen sein.

Auch können statt ringförmigen oder linienförmigen auch ovale rechteckige oder sonst wie geformte Verbindungsstellen vorgesehen sein. Durch ovale und dadurch längliche, entsprechend ausgerichtete Verbindungsstellen kann auch die gute Belastbarkeit der Verbindungen und die Funktion des Induzierens einer Querströmung mit einer Art Verbindungsstellen realisiert werden.

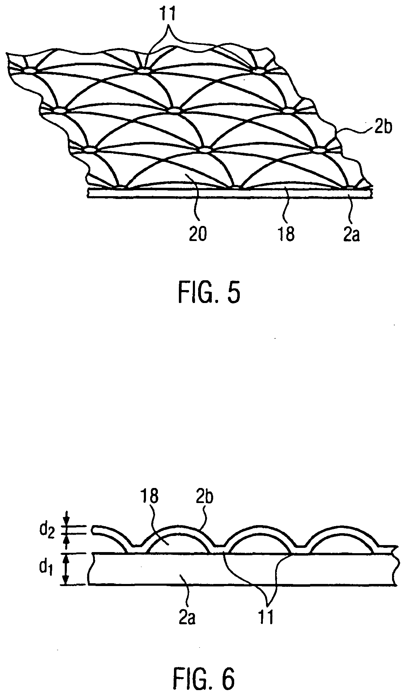

In den Figuren 5 und 6 sind Detailvergrößerungen der Seitenwand 2 dargestellt, bei denen beispielhaft lediglich ringförmige Verbindungsstellen 11 vorgesehen sind. Entsprechende Formen ergeben sich jedoch in gleicher Weise für andere Verbindungsstellen. Die Seitenwand 2 ist in den Figuren 5 und 6 im Vergleich zu den Figuren 1 und 2 um 90° gedreht.

In den Figuren 5 und 6 ist jeweils eine Seitenwand 2 mit einer Wandung 2a und einer Wandung 2b dargestellt. Die Wandung 2a ist eben, wohingegen die Wandung 2b Unebenheiten aufweist. An den Stellen 11 ist die Wandung 2b mit der Wandung 2a verbunden. Hier liegen die Wandungen 2a und 2b dicht aufeinander. Die Verbindungsstellen 11 können beispielsweise Schweißstellen sein. Diese Verbindungsstellen 11 sind bevorzugterweise ringförmig ausgebildet, um so eine gute und belastbare Verbindung zwischen den Wandungen 2a und 2b zu gewährleisten. Zwischen den Verbindungsstellen 11 sind Hohlräume 18 vorgesehen, die durch wellen-, blasen- oder wölbungsförmige Unebenheiten der Seitenwandung 2b gegeben sind. Eine Unebenheit ist in Fig. 5 mit der Bezugsziffer 20 gekennzeichnet. Die Linien in Fig. 5, die zwischen den Verbindungsstelle 11 bogenförmig laufen, dienen lediglich der Andeutung der Unebenheiten. Sie repräsentieren jedoch für sich kein tatsächliches Element der Wandung 2b.

In Fig. 6 sind die Unebenheiten und die Hohlräume 18 aus Gründen der Anschaulichkeit etwas überhöht dargestellt.

Wie in Figur 6 zu erkennen ist, ist die Wandstärke d₂ der Wandung 2b geringer als die Wandstärke d₁ der Wandung 2a. Die Wandung 2b kann beispielsweise eine Dicke d₁ von 0,5 mm, 1,0 mm, 1,5 mm, 2,0 mm, 2,5 mm, 3,0 mm, 3,5 mm, 4,0 mm, 4,5 mm oder 5,0 mm bis 2,0 mm, 2,5 mm, 3,0 mm, 3,5 mm, 4,0 mm, 4,5 mm, 5,0 mm, 5,5 mm, 6,0 mm, 6,5 mm, 7,0 mm, 7,5 mm, 8,0 mm, 8,5 mm, 9,0 mm, 9,5 mm oder 10,0 mm aufweisen.

Die Wandung 2a, kann eine Dicke d₁ von 0,5 mm, 1,0 mm, 1,5 mm, 2,0 mm, 2,5 mm, 3,0 mm, 3,5 mm, 4,0 mm, 4,5 mm oder 5,0 mm bis 2,0 mm, 2,5 mm, 3,0 mm, 3,5 mm, 4,0 mm, 4,5 mm, 5,0 mm, 5,5 mm, 6,0 mm, 6,5 mm, 7,0 mm, 7,5 mm, 8,0 mm, 8,5 mm, 9,0 mm, 9,5 mm, 10,0 mm oder 10,5 mm haben.

Ansichten entsprechend der Figuren 5 und 6 von dem Bodenelement 6, wie es in Figur 4 gezeigt ist, sind an sich recht ähnlich.

Als Material für die Wandungen 2a, 2b kommt ein schweißbares Material, wie beispielsweise Edelstahl, in Betracht. Die Verbindungsstellen 11 sind dann Schweißstellen. Zur Herstellung der Seitenwand 2 und des Bodens 6 werden zwei Bleche mit unterschiedlichen Dicken an den Verbindungsstellen 11 oder 12 aufeinander geschweißt. Die Randbereiche der beiden Bleche werden druckdicht und vorzugsweise spaltenfrei miteinander entlang der Kanten verschweißt. Anschließend wird der Zwischenraum zwischen den beiden Blechen mit einem Druckmittel mit entsprechendem Druck beaufschlagt, sodass sich das dünnere Blech 2b auswölbt, wie dies in Figuren 2, 5 und 6 dargestellt ist. Entsprechendes gilt für die Elemente des Bodens 6.

Sowohl Seitenwand 2 als auch Boden 6 sind vorteilhafterweise aus verschiedenen Segmenten zusammengesetzt, könnten jedoch auch aus einem einzelnen Teil bestehen. Bei gleicher Konfiguration der Verbindungsstellen 11a, 11 b sowie 12a, 12b kann Boden und Seitenwand aus demselben Rohmaterial gefertigt werden.

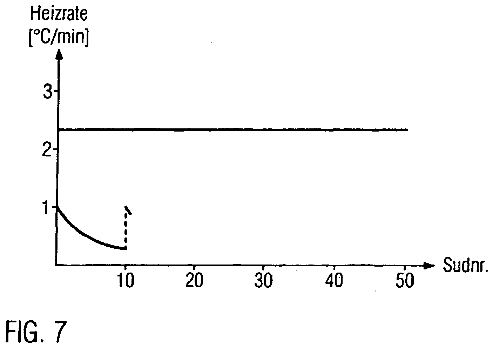

In Figur 7 ist die Heizrate als Funktion der Sudnummer für zwei Fälle aufgetragen. Im ersten Fall (untere Linie) wurde eine herkömmliche Maischepfanne eingesetzt. Hier ist zu erkennen, wie mit steigender Sudnummer die Heizrate von etwa 1° Celsius pro Minute auf bis unter 0,5° Celsius pro Minute absinkt. Das Absinken der Heizrate ist im Wesentlichen dadurch bedingt, dass an der Oberfläche Maischereste festbacken, die einen Wärmeübergang verhindem (Fouling). Nach Reinigung der Maischepfanne wird die ursprüngliche Heizrate von 1° Celsius pro Minute wieder erreicht.

Der zweite Fall zeigt das Ergebnis der Heizrate als Funktion der Sudnummer für eine Ausführungsform der vorliegenden Erfindung. Hier ist die Heizrate zum Einen wesentlich höher als im ersten Fall (höher als 2° Celsius pro Minute). Es ist jedoch weiterhin auch ersichtlich, dass kein Absinken der Heizrate als Funktion der Sudnummer zu beobachten ist. Reinigungszyklen können deshalb viel seltener durchgeführt werden oder können eventuell sogar ganz wegfallen.

## Patentansprüche

1. Maisch- oder Würzepfanne zum Erhitzen von Maische oder Würze in der Getränketechnologie, wobei zum Erhitzen des Fluids in einem Fluidbereich (3) wenigstens eine beheizbare Kontaktfläche (2, 6) vorgesehen ist, wobei an der Kontaktfläche (2, 6) zumindest teilweise Unebenheiten (20) vorgesehen sind,
wobei die Unebenheiten an einer mit dem Fluid in Kontakt befindlichen Fläche vorgesehen sind,
die Unebenheiten (20) an einer Seitenwand (2) und/oder einem Boden (6) vorgesehen sind,
eine Einrichtung (17) vorgesehen ist, durch die das Fluid entlang der Kontaktfläche (2, 6) in einer Bewegungsrichtung bewegt werden kann und die Bewegungseinrichtung ein Rührwerk umfasst, und wobei
die Unebenheiten (20) wellenförmig und/oder blasenförmig und/oder wölbungsförmig sind und die Kontaktfläche (2, 6) doppelwandig ist.

2. Maisch- oder Würzepfanne nach Anspruch 1, **dadurch gekennzeichnet, dass** die Unebenheiten (20) periodisch sind.

3. Maisch- oder Würzepfanne nach Anspruch 1, **dadurch gekennzeichnet, dass** eine zum Fluidbereich (3) gerichtete Wandung (2b) dünner oder gleich dick ist, wie die andere Wandung (2a).

4. Maisch- oder Würzepfanne nach Anspruch 1 oder 3, **dadurch gekennzeichnet, dass** die beiden Wandungen (2a, 2b) miteinander an einer Vielzahl von Verbindungsstellen (11a, 11b, 12a, 12b) miteinander verbunden sind, und dass die Unebenheiten (20) zwischen den Verbindungsstellen (11a, 11b, 12a, 12b) sind.

5. Maisch- und Würzepfanne nach Anspruch 4, **dadurch gekennzeichnet, dass** eine zum Fluidbereich (3) gerichtete Wandung (2b, 6b) zwischen den Verbindungsstellen (11a, 11b, 12a, 12b) zum Fluidbereich (3) hin gewölbt ist.

6. Maisch- und Würzepfanne nach einem der Ansprüche 4 oder 5, **dadurch gekennzeichnet, dass** eine von dem Fluidbereich (3) abgewandte Wandung (2a, 6a) eben ist.

7. Maisch- oder Würzepfanne nach Anspruch 6, **dadurch gekennzeichnet, dass** die beiden Wandungen (2a, 2b, 6a, 6b) an den Verbindungsstellen (11a, 11b, 12a, 12b) miteinander durch Schweißungen verbunden sind.

8. Maisch- oder Würzepfanne nach Anspruch 1 und 4, **dadurch gekennzeichnet, dass** die Verbindungsstellen (11b, 12b) länglich sind und mit ihrer langen Ausdehnung im Vergleich zur Bewegungsrichtung des Fluids schräg angeordnet sind.

## Claims

1. A mash or wort pan for heating mash or wort in beverage technology, at least one heatable contact surface (2, 6) being provided for heating the fluid in a fluid area (3), wherein at least partial irregularities (20) are provided on the contact surface (2, 6), the irregularities (20) being provided on an area in contact with the fluid,
The irregularities (20) are provided on a side wall (2) and/or a bottom (6),
A means (17) is provided for moving the fluid along the contact surface (2, 6) in a direction of movement and the moving means comprises an agitator
and wherein
The irregularities (20) are in the form of waves and/or bubbles and/or bulges and the contact surface is double-walled.

2. The mash or wort pan according to claims 1, **characterized in that** the irregularities (20) are periodic.

3. The mash or wort pan according to claims 1, **characterized in that** a wall (2b) which is oriented towards the fluid area (3) is thinner than or is as thick as the other wall (2a).

4. The mash or wort pan according to claims 1 or 3, **characterized in that** the two walls (2a, 2b) are interconnected at a plurality of interconnect points (11a, 11b, 12a, 12b) and that the irregularities (20) are located between the interconnect points (11a, 11b, 12a, 12b).

5. The mash or wort pan according to claim 4, **characterized in that** a wall (2b, 6b) which is oriented towards the fluid area (3) is curved between the interconnect points (11a, 11b, 12a, 12b) towards the fluid area (3).

6. The mash or wort pan according to one of claims 4 or 5, **characterized in that** a wall (2a, 6a) which is oriented away from the fluid area (3) is even.

7. The mash or wort pan according to claim 6, **characterized in that** the two walls (2a, 2b, 6a, 6b) are interconnected at the interconnect points (11a, 11b, 12a, 12b) by welds.

8. The mash or wort pan according to claim 1 and 4, **characterized in that** the interconnect points (11b, 12b) are elongated and are obliquely arranged with their longitudinal extension in comparison with the direction of movement of the fluid.

## Revendications

1. Chaudière à maische ou à moût pour le chauffage de la maische ou du moût dans la technologie des boissons, dans laquelle, pour le chauffage du fluide, on prévoit, dans une zone (3) réservée au fluide, au moins une surface de contact (2, 6) apte à être chauffée, dans laquelle on prévoit, contre la surface de contact (2, 6), des dénivellations au moins partielles (20),
les dénivellations étant prévues contre une surface se trouvant en contact avec le fluide,
les dénivellations (20) étant prévues contre une paroi latérale (2) et/ou sur une base (3),
on prévoit un dispositif (17) à travers lequel le fluide peut se déplacer le long de la surface de contact (2, 6) dans une direction de déplacement, et le dispositif de déplacement comprend un remueur, et
les dénivellations (20) sont réalisées en forme de vagues et/ou en forme de bulles et/ou en forme de voûte, et
la surface de contact (2, 6) est à double paroi.

2. Chaudière à maische ou à moût selon la revendication 1, **caractérisée en ce que** les dénivellations (20) sont périodiques.

3. Chaudière à maische ou à moût selon la revendication 1 ou 2, **caractérisée en ce qu'**une paroi (2b) orientée vers la zone (3) réservée au fluide possède une épaisseur inférieure ou égale à celle de l'autre paroi (2a).

4. Chaudière à maische ou à moût selon l'une des revendication 1 à 3, **caractérisée en ce que** les deux parois (2a, 2b) sont reliées l'une à l'autre à plusieurs endroits de liaison (11a, 11b, 12a, 12b), et **en ce que** les dénivellations (20) sont disposées entre les endroits de liaison (11a, 11b, 12a, 12b).

5. Chaudière à maische ou à moût selon la revendication 4, **caractérisée en ce qu'**une paroi (2b, 6b), entre les endroits de liaison (11a, 11b, 12a, 12b), orientée vers la zone (3) réservée au fluide, est bombée en direction de la zone (3) réservée au fluide.

6. Chaudière à maische ou à moût selon l'une des revendications 4 ou 5, **caractérisée en ce qu'**une paroi (2a, 6a) qui se détourne de la zone (3) réservée au fluide est plane.

7. Chaudière à maische ou à moût selon la revendication 6, **caractérisée en ce que** les deux parois (2a, 2b, 6a, 6b) sont reliées l'une à l'autre aux endroits de liaison (11a, 11b, 12a, 12b) par des soudures..

8. Chaudière à maische ou à moût selon la revendication 1 ou 4, **caractérisée en ce que** les endroits de liaison (11b, 12b) sont de forme oblongue et sont disposés en inclinaison sur leur étendue en longueur, par rapport à la direction de déplacement du fluide.
